**Europäisches Patentamt**

**European Patent Office**

**Office européen des brevets**

(19)

(11) Publication number: **0 061 839**
**A1**

(12)

# EUROPEAN PATENT APPLICATION

(21) Application number: **82301010.3**

(22) Date of filing: **26.02.82**

(51) Int. Cl.³: **G 05 B 19/405**

(30) Priority: **16.03.81 JP 37480/81**

(43) Date of publication of application:
**06.10.82 Bulletin 82/40**

(84) Designated Contracting States:
**BE DE FR GB IT NL SE**

(71) Applicant: **KITAMURA KIKAI KABUSHIKI KAISHA
(KITAMURA MACHINERY CO.,LTD.)**
**1870 Toide-Komyoji**
**Takaoka-shi Toyama-ken(JP)**

(72) Inventor: **Kitamura, Koichiro**
**3-11-5 Ekinan**
**Takaoka-shi Toyama-ken(JP)**

(74) Representative: **Wood, Anthony Charles et al,
c/o MICHAEL BURNSIDE & PARTNERS 2 Serjeants' Inn
Fleet Street
London EC4Y 1HL(GB)**

(54) Control panel with speech audio output apparatus for numerically controlled machine tools.

(57) A control panel (3) provided for a numerically controlled machine tool (1) such as a machining center or NC lathe is equipped with a speech audio output apparatus (4). The speech audio output apparatus (4) provides audio outputs such as the matters to be noted for starting the machine (1) at the start of the operation thereof, explanations of various operating procedures and warnings against the occurrence of abnormal conditions. The program contents for these audio outputs are preliminarily stored in the memory device (41) of the apparatus (4) and the proper program content corresponding to the content of the machine operation is read and reproduced.

EP 0 061 839 A1

./...

Croydon Printing Company Ltd.

CONTROL PANEL WITH SPEECH AUDIO OUTPUT
APPARATUS FOR NUMERICALLY CONTROLLED
MACHINE TOOLS

The present invention relates to control panels provided
for numerically controlled machine tools such as machining
centers and NC lathes, and more particularly the invention
relates to a control panel equipped with a speech audio
output apparatus which generates audio outputs such as the
matters to be noted for starting the operation of a machine
at the start of its operation, explanations of various
operating procedures and warnings against the occurrence of
abnormal conditions such as troubles.

The recent tendency with machine tools, particularly
numerically controlled machine tools including machining
centers, NC lathes, etc., is such that it is more and more
difficult to visually observe the current status of a machine
and this is due to the movements of the machine being
controlled by a numerically controlling computer. This type
of numerically controlled machine tool is equipped with a
control panel for performing such operations as starting,
stopping, selection of operations, mode changing, data
inputting, indication of operations, etc., and the control
panel is in turn equipped with lamps for indicating these
operating conditions or a cathode ray tube (CRT) display
unit for displaying the desired characters or numerals.
With the indications provided by such lamps or CRT display unit, however, a considerable time is required to accurately determine the contents of the statuses of the machine from the indications and there is the danger of delay in properly responding to the indications unless the operator is a skilled one who is well versed with the numerical control program. Further, if the operator is relieved by another in the course of the operation, it is necessary for the relief operator to understand the indications or the characters and numerals from the very beginning. Otherwise, it is impossible to grasp the current status of the machine with the resulting danger of causing any unexpected trouble.

The present invention has been made in view of these circumstances in the art, and it is the primary object of the invention to provide a control panel equipped with a speech audio output apparatus in which in addition to only the characters, numerals and symbols heretofore provided by a CRT display unit, universal display or lamp indications, the confirmation of directions relating to the handling or operation of a machine, matters to be noted for operating the machine, warnings against troubles, etc., are provided by means of voices in the form of spoken words so that a greater amount of directive information is provided through the ear of the operator and thus the operator is allowed to grasp the status of the machine with greater accuracy.

Thus, in accordance with the present invention there is provided a control panel provided for a numerically controlled machine tool so as to perform such operations as the starting, stopping, selection of operations, mode changing, data inputting and indication of operations of the machine tool , and the control panel is equipped with a speech audio output apparatus for outputting the explanations of the contents of various operations of the machine tool, such as, the matters to be noted in relation with the starting of the machine tool at the start of its operation, the explanations of the operating procedures of the machine tool and the warnings against abnormal conditions. The speech audio output apparatus comprises an audio memory storing various audio programs preliminarily, an input/output controller responsive to an operation content indicative code signal from the numerical control system of the machine tool to read the corresponding audio program from the audio memory, an amplifier for amplifying the audio program signal read out by the input/output controller and a speaker adapted to be operated by the amplifier.

In accordance with the above-described control panel equipped with the speech audio output apparatus, the steps which must be taken by the operator for operating a machine tool are provided in the form of spoken words and thus the operator is allowed to readily make fair judgement, thus permitting any person to grasp the current status of the machine tool and transmitting the occurrence of erroneous operations, measures required to cope therewith and the contents of troubles in terms of ample information and thereby reducing the mental and physical burdens on the operator and contributing toward preventing danger.

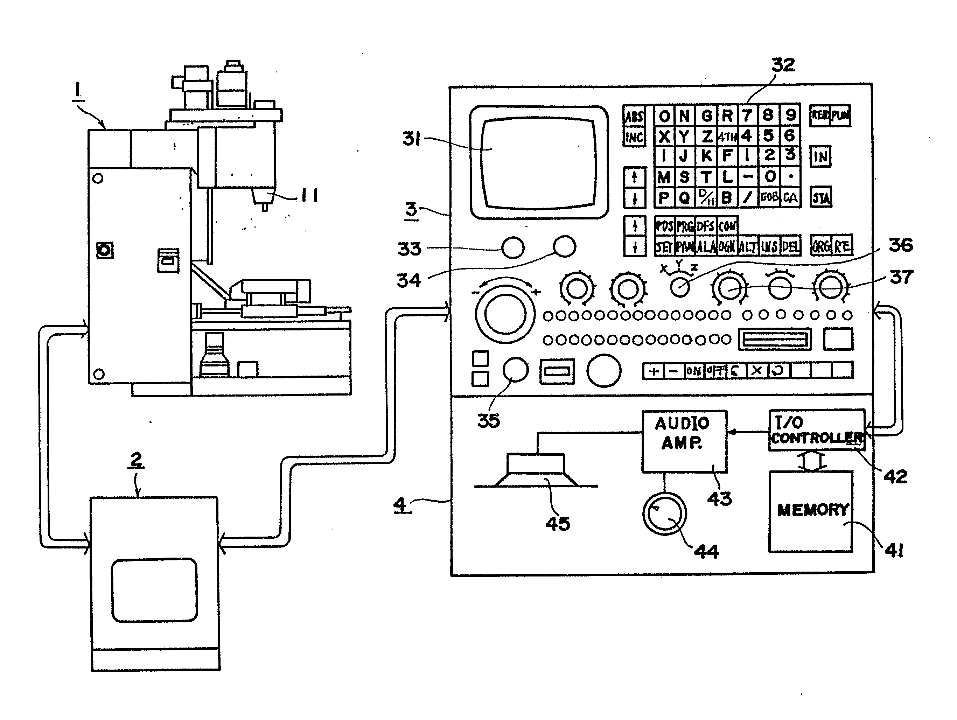

The invention will be described in greater detail with reference to the accompanying drawing showing a preferred embodiment of the invention.

The single figure drawing is a schematic diagram showing, part in block diagram form, the system construction of a numerically controlled machine tool equipped with a control panel with a speech audio output apparatus according to the present invention.

In the Figure, numeral 1 designates a machine tool, 11 a tool head, 2 a numerical control system of the machine tool 1, and 3 a control panel located near the machine tool 1. The machine tool 1, the numerical control system 2 and the control panel 3 are connected with one another by signal lines, so that in accordance with the tape inputting through the numerical control system 2 or the data inputting by means of keys 32 on the control panel 3 the tool head 11 is caused to machine the work through the operations effected by means of the various operating switches and dials of the control panel 3 including a starting setup switch 33, a key switch 35, a stop switch 34, an axis selector switch 36, a mode selector switch 37, etc. Numeral 31 designates a CRT display unit whereby during the machining the contents of the working programs or the like are displayed in the form of characters or numerals. Of course, the control panel 3 is provided with a head spindle speed indicator, tool number indicator, etc., in addition to the above-mentioned component parts.

In this way, the various functions including the starting, stopping, selection of operations, mode changing, data inputting and display of operations are performed and the programmed machining is effected automatically.

Then, the control panel 3 of this invention is equipped with a speech audio output apparatus 4 so that in response to a code signal indicative of the content of the machine operation and supplied from the numerical control system 2 via the control panel 3 the speech audio output apparatus 4 generates a speech audio output corresponding to the content of the operation.

More specifically, the speech audio output apparatus 4 comprises an audio memory 41 including for example a magnetically recorded tape, IC read-only memory (ROM) device, magnetic bubble memory device or magnetic floppy disk preliminarily storing various audio programs to be expressed, such as, the matters to be noted for starting during the operation starting period, the explanations of operating procedures, the warnings against the occurrence of troubles during the machining, etc., an input/output controller 42 which receives the code signal via the control panel 3 and operates as a so-called sequencer to read out the audio program corresponding to the content of the operation of the machine and an audio amplifier 43 for amplifying the audio program read from the audio memory 41 by the input/output controller 42 and delivering the same as an acoustic output to the outside through a speaker 45. In the Figure, numeral 44 designates a volume control knob.

The combination of the input/output controller 42 and the audio memory 41 corresponds to the combination of a sequencer and a memory which determines the content of the machine operation in accordance with the code signal received via the control panel 3 and makes an access to the corresponding address of the memory 41 in accordance with the code content, and the combination may be comprised of a microcomputer. By using such a microcomputer, it is possible to control the speech audio output apparatus 4 separately so that it is disconnected with the machine tool 1 to separately generate its output. For example, it is possible to arrange so that after connecting the speech audio output apparatus 4 to the power source, changing the control mode of the control panel 3 to the local mode and setting up the manual start, the operation of the apparatus 4 alone is started and thus the necessary steps up to the preparation of the machine tool are delivered in the form of an audio output from the speaker 45. In this case, a series of programs such as listed below may be read out sequentially as the audio programs within the memory 41:

(a) Type of machine: "This machine is such and such".

(b) Explanation: "Matters to be noted for starting will now be explained".

(c)   Explanation:   "Is the lubricating oil contained?"

(d)   Ditto "Is the amount of air sufficient?"

(e)   Ditto "Is the power on?"

　　　.　　　　　　　.

　　　.　　　　　　.

　　　.　　　　　　.

　.　.　　　　　　.

(n)   Ditto "Connect to the power source."

This can be accomplished by preliminarily programming the sequence of actions taken by the memory 41 and the input/ output controller 42.

Another examples of audio programs are explanations of the necessary operating procedures in cases where the operator is at a loss for the operating procedures during the operation of the machine tool or where the machine tool is operated by an inexperienced person, and these programs can be obtained by simply externally applying code signals corresponding to the desired operating procedures to the input/output controller 42 of speech audio output apparatus 4 and starting the operation of the output apparatus 4. In this case, the key switches 32, etc., of the control panel 3 may be used for code signal inputting purposes.  The audio programs for such cases may include for example the tool changing procedure, tool number matching, automatic setting of off-set amount, spindle speed changing, etc.

The speech audio output apparatus 4 has a more important function, that is, it serves the function of automatically giving a warning against the occurrence of an abnormal condition such as a trouble during the operation of the machine tool.  From a broad sense of view, this must be related as an overall monitor function to the system and the necessary sequence must be established in relation with the existing monitor circuits.  In this case, the desired audio programs may include for example : "The lubricating oil is running short", "The air pressure is insufficient", "The table is overrunning", "The fuse is blown off," "The machine is overloaded", "The tool is overweight", "The wrong tool is selected", "The thermal relay is in operation", "There is an irregularity in the NC machine", etc., and these programs ensure early and accurate detection of abnormal conditions which will occur during the operation of the machine tool and prevention of any troubles.  In this case, methods of dealing with the troubles caused may be incorporated into programs and the programs may be delivered as audio outputs.

It will thus be seen from the foregoing description that in accordance with the present invention there are many advantages that various operation indications and monitor indications of a numerically controlled machine tool can be conveyed to the operator visually as well as through the ear thus ensuring early and accurate conveyance of the accurate contents to the operator and enabling the operator to positively grasp the status of the machine tool,  that any person other than skilled persons can understand the contents, that the control panel can be adapted for shipment abroad by simply changing the memory or tape of the memory unit so

0061839

as to output the programs in the language of the country concerned, that a greater amount of information can be conveyed in a shorter period of time than visually and so on.

What is claimed is:

1. A control panel with a speech audio output apparatus for numerically controlled machine tools, said control panel being provided for a numerically controlled machine tool to perform operations including the starting, stopping, selection of operations, mode changing, data inputting, indication of operations of said numerically controlled machine tool, wherein said speech audio output apparatus comprises audio memory means storing audio programs indicative of contents of various operations of said machine tool, such as, matters to be noted for starting said machine tool when starting the operation thereof, explanations of operating procedures of said machine tool and warnings against abnormal conditions, input/output controller means responsive to a code signal corresponding to the content of one of said operations and applied from numerical control means of said machine tool to read out corresponding one of said audio programs, and an amplifier and a speaker for outputting said audio program signal read out by said input/output controller means.

2. A control panel according to Claim 1, wherein said audio memory means comprises as a storage medium selected one of a magnetically recorded tape, IC read-only memory device, magnetic bubble memory device and magnetic floppy disk.

0061839

# 0061839

EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 740 873 (KUNZMANN WERKZEUGMASCHINENFABRIK) <br> * page 5, line 1 to page 6, line 11; figures 1,2 * | 1,2 | G 05 B 19/405 |
| P | PATENTS ABSTRACTS OF JAPAN, vol.5, no.185 (p-91) (857), November 25, 1981, page 108 P 91 & JP - A - 56 114 004 (AIDA ENGINEERING K.K.) (08-09-1981) | 1 | |
| E | EP-A-0 047 414 (KEARNEY & TRECKER) <br> * page 4, line 15 to page 6, line 19; page 8, lines 10 to 25; figures 1,3 * | 1,2 | |
| E,P | EP-A-0 038 687 (KENWOOD) <br> * page 5, line 1 to page 7, line 13; figure * | 1 | TECHNICAL FIELDS SEARCHED (Int. Cl. ³) <br><br> G 05 B 19/00 |

The present search report has been drawn up for all claims

| Place of search <br> THE HAGUE | Date of completion of the search <br> 28-06-1982 | Examiner <br> RUGGIU M.L.J.J. |
|---|---|---|